# EUROPEAN PATENT SPECIFICATION

(11) **EP 1 298 827 B1**
(45) Date of publication and mention of the grant of the patent: **04.10.2006**
(21) Application number: 02252412.8
(22) Date of filing: 03.04.2002
(51) Int. Cl.: H04J 14/08, H04B 10/17

(54) **Optical signal processing system**
Optisches Verarbeitungssystem
Système de traitement de signal optique

(30) Priority: 27.09.2001 JP 2001297192
(43) Date of publication of application: 02.04.2003
(73) Proprietor: FUJITSU LIMITED, Kawasaki-shi, Kanagawa 211-8588 (JP)
(72) Inventor: Sugawara, Mitsuru, c/o Fujitsu Limited, Kawasaki-shi, Kanagawa 211-8588 (JP)
(74) Representative: Stebbing, Timothy Charles

(56) References cited:
- EP-A- 1 093 011
- WO-A-01/05084
- US-A- 5 721 637
- US-A- 5 742 415
- US-B1- 6 282 007
- WIESENFELD J M ET AL: "CASCADABILITY AND FANOUT OF SEMICONDUCTOR OPTICAL AMPLIFIER WAVELENGTH SHIFTER" IEEE PHOTONICS TECHNOLOGY LETTERS, IEEE INC. NEW YORK, US, vol. 4, no. 10, 1 October 1992 (1992-10-01), pages 1168-1171, XP000316548 ISSN: 1041-1135
- JOERGENSEN C ET AL: "40 Gbit/s all-optical wavelength conversion by semiconductor optical amplifiers" ELECTRONICS LETTERS, IEE STEVENAGE, GB, vol. 32, no. 4, 15 February 1996 (1996-02-15), pages 367-368, XP006004710 ISSN: 0013-5194
- TAJIMA S ET AL: "ULTRAFAST ALL-OPTICAL SIGNAL PROCESSING WITH SYMMETRIC MACH-ZEHNDER TYPE ALL-OPTICAL SWITCHES" OPTICAL AND QUANTUM ELECTRONICS, CHAPMAN AND HALL, LONDON, GB, vol. 33, no. 7-10, July 2001 (2001-07), pages 875-879, XP001179270 ISSN: 0306-8919

## Description

The present invention relates to an optical signal processing system and, more particularly, an optical signal processing system that is available for long-distance large-traffic optical communication, etc.

The wavelength division multiplexing (WDM) optical communication system has been developed as an optical communication system in a large-traffic optical network. Also, the optical time division multiplexing (OTDM) optical communication system aiming at the large traffic optical communication or the time wavelength division multiplexing (TWDM) optical communication system in which the WDM optical communication system and the OTDM optical communication system are combined together has been proposed. Research and development of these systems is progressing.

The WDM optical communication system increases the signal density by wavelength-multiplexing the signal light (light signal). Also, the time dividing system such as OTDM or TWDM intends to increase the signal density of the pulsed light that has a very narrow time width of the same wavelength.

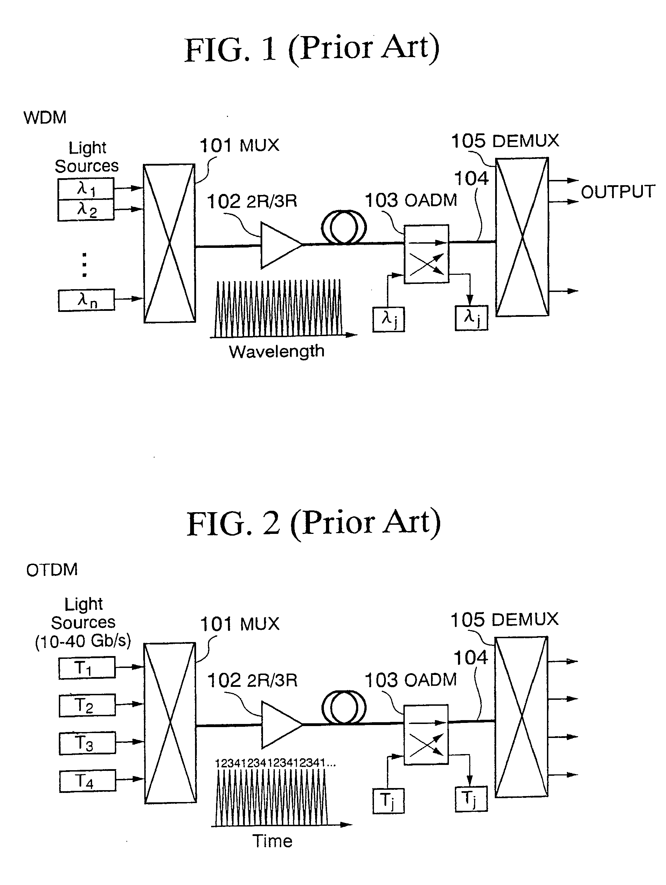

The WDM has a configuration shown in FIG. 1, for example, and the OTDM has a configuration shown in FIG.2, for example.

In FIG.1 and FIG.2, a multiplexer (MUX) 101 that optically multiplexes light source signals of various wavelengths is connected to a demultiplexer (DEMUX) 105 via a 2R/3R element 102, an optical add-drop multiplexer (OADM) 103 and an optical fiber 104.

The 2R/3R element 102 is a regenerator of the optical signal, and may be either a 3R regenerating element that has three functions of regenerating, reshaping, and retiming or a 2R regenerating element that has two functions of regenerating and reshaping. The optical add-drop multiplexer 103 is an optical switching system that is capable of adding or dropping arbitrarily the optical signal for every wavelength without conversion into an electrical signal.

In the WDM optical communication system shown in FIG. 1, multi-wavelength optical signals λ₁, λ₂, ... , λₙ are multiplexed multiplicately by the multiplexer 101 without time division. These optical signals λ₁, λ₂,..., λₙ are demultiplexed by the demultiplexer 105 at every wavelength.

In the OTDM optical communication system shown in FIG.2, a plurality of optical signals T₁, T₂, T₃, T₄ of the same wavelength that are subjected to time division are multiplexed by the multiplexer 101 and then demultiplexed by the demultiplexer 105.

An optical signal processing system which can execute signal processing such as relaying, multiplexing, demultiplexing, routing, etc. of the optical signals in the middle of the optical transmission, as well as a multi- wavelength high-speed light source, is indispensable to increase the traffic by using the above communication systems.

Previously, in order to perform optical signal processing, the method of converting the optical signal into an electrical signal and then processing such electrical signal was employed.

For example, in the 3R regenerative relay system, first the optical signal is detected and converted into an electrical signal, and then the reshaping is applied in the electrical domain. Then, the clock (sine wave of the frequency of the bit rate) is extracted from the reshaped signal, and then the retiming for deciding the timing at which on-off decision is made according to the clock is carried out. Then, the regeneration in which such on-off is discriminated and the light source is modulated again based on this discriminating signal to send out the strong light is carried out. The three reshaping, retiming, and regenerating functions are called the 3R-function.

At present, optical amplifying technology that can amplify the optical signal as it is by using an erbium (Er)-doped optical fiber, etc. is advancing, and thus the optical signal can be relayed without converting it into the electrical domain. This technology can compensate for signal loss but does not have the retiming and reshaping functions, unlike the above 3R regenerative repeater. As a result, waveform distortion and pulse jitter tend to accumulate in existing all-optical (analog) systems. In contrast to such defect, since no optical-electrical conversion is carried out, optical amplification has the merit that high-speed modulated signals can be relayed without restrictions due to the speed of electronic circuits, and the merit that multi-wavelength (multi- channel) signals used in the WDM can be processed simultaneously.

This optical amplifying technology is sufficient if the multiplexing in time/wavelength domains is not so high in density, and thus this optical fiber amplifying technology is widely employed in optical communication at present.

However, in future the task of regenerating the optical pulse will grow rapidly, particularly with the progress of multiplexing in the time domain. Thus, a technology which is up to this task is needed. For example, in order to enhance multiplexing in the time domain, reduction in the pulse width, increase in the bit rate, reduction in the optical pulse energy, etc. are needed. In this case, the reduction in the pulse width causes collapse of the waveform of the optical pulse due to group velocity dispersion, the increase in bit rate causes an increase in reading errors due to interference between pulses, and the reduction in the optical pulse energy causes an increase in reading errors due to the reduction of the S/N ratio generated by ASE (Amplified Spontaneous Emission) noise from the optical fiber amplifier. For this reason, a repeater is required once again.

However, in the optical repeating operation by using the electrical domain as in the prior art, there is a speed limitation. That is, since the response speed of the electrical signal is limited by the drift velocity of the carriers of the electronic device and the CR time constant and also the bit rate in signal processing in the electrical domain is limited to 10 to 40 Gb/s, it is impossible to deal with a high-speed signal in excess of this time- multiplexed bit rate. Also, it is apparent that some overhead is incurred in executing the regeneration from light to electricity or from electricity to light.

Thus, there is a need for an all optical 3R-repeating technology that does not depend on the light-electricity conversion but executes the optical signal processing in the optical domain, as a technology indispensable for increasing the capacity of optical communication.

Also, as multiplexing in the time domain makes progress, there is a need for an optical demultiplexer (DEMUX) element for demultiplexing the optical signal into a signal of a bit rate able to be dealt with by other electronic devices. As described above, electrical signals are currently limited to a maximum bit rate of around 10 to 40 Gb/s. Thus, in order to process an OTDM signal in which optical signals having these bit rates are multiplexed, first a DEMUX device is required which can demultiplex the respective signal components in the optical domain.

Meanwhile, an element having a function for processing multi-channel optical signals collectively is needed with the advance of wavelength multiplexing. It brings about an increase in size of the system, and an increase in cost, to provide a repeater and a DEMUX device for every channel one by one. Even if a high-speed switch that can deal with only a few channels, e.g., 2 or 3 channels, simultaneously can be achieved, size and cost reduction can be brought about. In addition, in order to execute the routing of the optical signal on different channels on the network, a wavelength-converting element for converting some wavelength to another wavelength is also required.

As described above, for multiplexing in the time/wavelength domains of future optical communication, the functions required for the optical signal processing system are summarized as follows.

That is, ① to attain a high-speed response of more than 10 to 40 Gb/s, ② to execute the processing of any bit pattern, ③ to execute processing of the signal as far as possible without wavelength conversion, ④ to execute wavelength conversion if necessary, ⑤ to process two signals or more having different wavelengths without crosstalk, etc. However, a system having such functions has not yet been developed.

Up to now, several optical signal processing systems having the optical repeating function and the DEMUX function have been reported, but they do not satisfy all the requirements stated above. As an example, an optical signal processing system having an optical repeating function and a DEMUX function has been reported in D. Wolfson et al., IEEE Photonic Tech. Lett. 12, 332(2000), "40 Gb/s All optical wavelength conversion, regeneration, and demultiplexing in an SOA-based all-active Mach/Zehnder Interferometer".

EP-A-1 093 011 by the present applicant discloses an optical signal processing system according to the preamble of claim 1. In this system, at least two nonlinear loop mirrors (NOLMs) are employed, each of which may employ a semiconductor optical amplifier (SOA).

XP316548A, "Cascadability and Fanout of Semiconductor Optical Amplifier Wavelength Shifter", discloses an optical wavelength shifter suitable for a WDM optical communication system and capable of a bit rate of 1-2 Gb/s. Two cascaded wavelength shifters are employed, each in the form of a SOA.

It is therefore desirable to provide an optical signal processing system suitable for high-speed response.

According to the present invention, there is provided an optical signal processing system comprising:
a first optical transmitting device for transmitting a first light signal having a first wavelength in a continuous light state and a second light signal having signal optical pulses and a second wavelength;
a first semiconductor optical amplifier for receiving the first light signal and the second light signal from the first optical transmitting device;
a pulse light source for outputting a controlling optical pulse train having a third wavelength in synchronism with the first light signal on which the second light signal is superposed by the first semiconductor optical amplifier;
a second optical transmitting device for transmitting the first light signal on which the second light signal is superposed by the first semiconductor optical amplifier and the controlling optical pulse train output from the pulse light source; and
a second semiconductor optical amplifier for receiving the first light signal and the controlling optical pulse train from the second optical transmitting device and outputting an output optical signal having the third wavelength, on which the signal optical pulses of the second light signal are superposed; characterised in that:
   each of the first and second semiconductor optical amplifiers contains semiconductor quantum dots, and pulses of said controlling optical pulse train are arranged to be in synchronism with weak light intensity portions of the first light signal, whereby high-speed wavelength conversion of said first and second light signals in the first semiconductor optical amplifier, and of the first light signal and the controlling optical pulse train in the second semiconductor optical amplifier, can be carried out by cross-gain modulation.

According to the present invention, a first light signal which is a continuous signal having a first wavelength, and a second light signal having a pulse waveform and a second wavelength, are input into the first semiconductor optical amplifier, whereby the intensity profile of the first light signal can be modulated into a waveform which is the inverted waveform of the second light signal pulse, and can be optically amplified. Also, the first light signal that is output from the first semiconductor optical amplifier and the controlling optical pulse train that is output from the pulse light source are input into the second semiconductor optical amplifier. Accordingly, the optical pulse of the controlling optical pulse train, which is synchronized with the low level intensity of the first light signal, can be optically amplified by the second semiconductor optical amplifier, and also the intensity of the optical pulse, which is synchronized with the high level intensity of the first light signal, can be lowered and output as the signal light. The optical output has substantially the same wavelength as the controlling optical pulse train.

Therefore, the second light signal having the second wavelength and the optical signal whose waveform is collapsed can be wavelength-converted into the output optical signal of the third wavelength by the first and second semiconductor optical amplifiers and can be reproduced. In this case, if the third wavelength and the second wavelength are set equal to each other, the waveform of the optical signal of the second light signal can be output from the second semiconductor optical amplifier as the output optical signal having the second wavelength, and thus can be reshaped and amplified without wavelength conversion and thus can be perfectly reproduced.

As a result, perfect reproduction of optical signals whose waveform is collapsed by noise, variation in the intensity, jitter, etc. can be achieved. Also, the DEMUX and the wavelength conversion of the optical time-division multiplexing signal can be achieved by employing such a configuration.

Reference is made, by way of example only, to the accompanying drawings in which:
Fig. 1 is a circuit block diagram showing a configuration of WDM in the prior art;
FIG.2 is a circuit block diagram showing a configuration of OTDM in the prior art;
FIG.3 is a perspective view showing a semiconductor optical amplifier (SOA) employed in an embodiment of the present invention;
FIG. 4 is a sectional view showing a structure of an active layer of the SOA of FIG. 3;
FIG.5 is a view showing a conduction band energy of a quantum dot formed in the active layer shown in FIG 4;
FIGS.6A to 6D are gain spectra showing the operational principle of the SOA;
FIG. 7 is a view showing an optical input-optical output characteristic of the SOA;
FIG.8 is a view showing a configuration of a regenerating/reshaping element employed in the embodiment of the present invention;
FIG.9 is a view showing a configuration of a wavelength converting element employed in the embodiment of the present invention;
FIG. 10 is a view showing a configuration of a first optical signal processing system embodying the present invention;
FIG.11 is a view showing a configuration of a second optical signal processing system embodying the present invention;
FIG.12 is a view showing a configuration of a third optical signal processing system embodying the present invention; and
FIG. 13 shows a gain curve that is spread according to a size distribution of quantum dots in the SOA employed in the embodiment of the present invention and gain saturation obtained when optical signals are incident.

An embodiment of the present invention will now be explained with reference to the accompanying drawings.

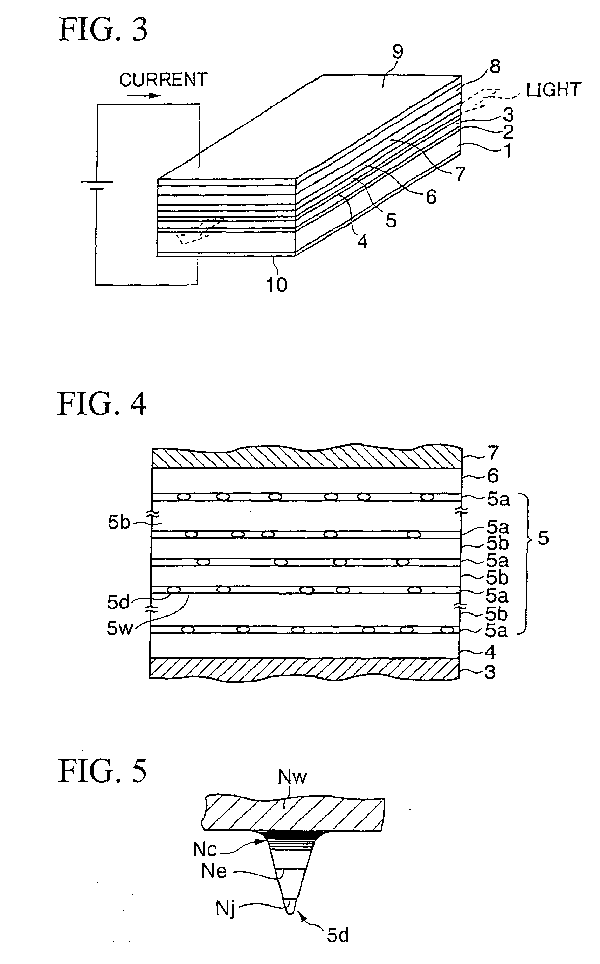

FIG.3 shows a semiconductor optical amplifier (abbreviated as "SOA" hereinafter) employed in an embodiment of the present invention.

The SOA has a structure in which a buffer layer 2 formed of n-type GaAs of 1 µm thickness, an n-type cladding layer 3 formed of n-type A1_{0.4}Ga_{0.6}As of 0.5 µm thickness, a lower optical confinement layer 4 formed of GaAs of 0.1 µm thickness, an active layer 5, an upper optical confinement layer 6 formed of GaAs of 0.1 µm thickness, a p-type cladding layer 7 formed of p-type Al_{0.4}Ga_{0.6}As of 1.0 µm thickness, and a p-type contact layer 8 formed of GaAs of 0.2 µm thickness are formed in sequence on an n-type GaAs substrate 1 having a thickness of 300 *µ*m. An n-type impurity concentration of the n-type GaAs substrate 1, the buffer layer 2, and the n-type cladding layer 3 is about 1 X 10¹⁸ cm⁻³ respectively, and a p-type impurity concentration of the p-type cladding layer 7 and the p-type contact layer 8 is about 1 X 10¹⁸ cm⁻³ respectively.

As shown in FIG.4, for example, the active layer 5 has a semiconductor quantum dot structure that is constructed by laminating a quantum dot layer 5a and a GaAs layer 5b alternately. For instance, the quantum dot layer 5a has ten layers and the GaAs layer 5b has nine layers. The thickness of the quantum dot layer 5a is 25 nm, and the thickness of the GaAs layer 5b is 25 µm. The quantum dot layer 5a consists of a number of quantum dots 5d formed of InAs irregularly as an underlying, and a wetting layer 5w formed of InGaAs to fill spaces between the quantum dots 5d. The size of the quantum dot 5d is about 20 nm. The quantum dot 5d confines charge carriers three-dimensionally.

Respective layers from the buffer layer 2 to the contact layer 8 are grown by a crystal growth method such as molecular beam epitaxy (MBE), for example.

A p-side electrode 9 made of AuZn alloy, for example, is formed on an upper surface of the p-type contact layer 8. Also, an n-side electrode 10 made of AuGe alloy, for example, is formed on a lower surface of the n-type GaAs substrate 1.

The quantum dot 5d is formed of a semiconductor that is smaller than the wavelength of the electron. The quantum dot 5d may have various shapes such as a shape close to a sphere, a flat lens shape, a rectangular prism shape, or the like. The distinctive feature of the quantum dot 5d is that the energy levels of an electron confined inside the quantum dot 5d are perfectly quantized and become discrete. It is expected that, by forming such quantum dots 5d in the active layer 5, the interaction between the electron and light can be enhanced and the high performance semiconductor laser can be realized. Thus, such quantum dots 5d have been studied for many years.

As a method of fabricating the quantum dots 5d, the self-assembly method is widely employed. The self-assembly method is such a method that the quantum dots are obtained by growing semiconductor material having a lattice constant different from the substrate, on the semiconductor substrate. Since the lattice constants are different, a large strain energy is accumulated between the substrate and the semiconductor grown thereon if the ordinary two-dimensional growth is employed. In order to avoid this, the semiconductor is grown not into a two-dimensional island but a three-dimensional island. Because the size of the island is similar to the wavelength of the electron, the energy of the electron in the quantum dot 5d is quantized.

For this reason, the energy levels of an electron in the conduction band of the quantum dot 5d are distributed discretely, as shown in FIG.5. The energy levels in FIG.5 are distributed into the ground state Nⱼ, the primary excited state Ne, and the secondary excited state Nc or above. As the difference between the energy levels in the secondary excited state Nc or more is smaller than the difference between the primary excited state Ne and the ground state Nⱼ or the difference between the secondary excited state Nc and the ground state Nⱼ, the secondary and higher excited states can be regarded as one continuous state. In FIG.5, N_{w} denotes the electron density that occupies the continuous state in the wetting layer 5w.

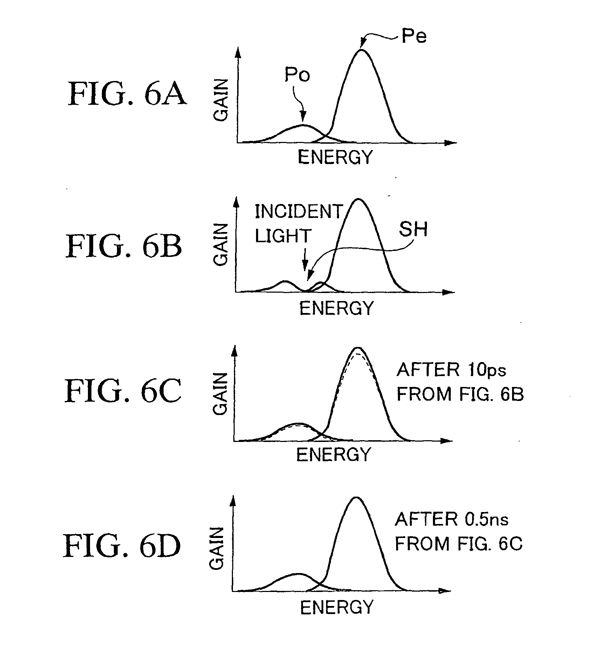

As shown in FIG. 6A, the gain spectrum of the SOA having the quantum dots 5d exhibits a peak Po corresponding to the ground state Nⱼ and a peak Pe corresponding to the excited states Ne, Nc. Then, as shown in FIG.6B, when an optical pulse corresponding to the energy of the ground state Nⱼ is incident upon the active layer 5, the electron density in the ground state Nⱼ is lowered by induced emission. A relaxation time of about 10 ps is required until the reduced electrons are replenished in the ground state Nⱼ. Therefore, a spectrum hole SH appears at the position that corresponds to the energy of the incident light and gain saturation is caused. As shown in FIG.6C, when the optical pulse passes through the active layer 5, the gain corresponding to the energy of the ground state Nⱼ is restored by the relaxation of the excited state Ne and the continuous state Nc. The time required to restore the gain is about 10 ps. As the electrons are transferred from the excited state Ne and the continuous state Nc to the ground state Nⱼ, the electron density in the excited state Ne and the continuous state Nc is lowered. As shown in FIG. 6D, the reduction in this electron density is supplemented by carriers injected from the electrodes 9, 10, and then the gain corresponding to the energy of the excited state Ne is restored up to the value in the steady state after about 0.5 ns.

In this manner, a relatively long time is required for restoration of the electron density in the excited state Ne and the continuous state Nc. However, the number of states of the excited state Ne and the continuous state Nc is larger than that of the ground state Nⱼ. If a sufficient number of electrons is injected previously into these states, the slowness of the restoration of the electron density in the excited state Ne and the continuous state Nc seldom exerts an influence upon the gain of the energy in the ground state Nⱼ.

As described above, in the case of the SOA having the quantum dots 5d, the response time is extremely short since gain saturation is caused by the generation of the spectrum hole SH. Also, the restoration of the gain is caused by the fact that the electrons are supplemented from the excited state Ne or the continuous state Nc to the ground state Nⱼ. Therefore, a recovery time of the gain is also extremely short.

An example of quantum dots as employed above is set forth in M. Sugawara, "Self-assembled InGaAs/GaAs quantum dots" (Academic Press, 1999).

By providing semiconductor quantum dots in the active layer 5 of the SOA, the speed and multi-wavelength processing performance of the SOA can be improved more than with an active layer having a single or multiple quantum well structure known in the prior art.

In addition, it is described in detail in M. Sugawara et al. Jap. J. Appl. Phys., 40, L488(2000), "Quantum-dot semiconductor optical amplifiers for high bit-rate signal processing over 40Gb/s" that a SOA having a quantum dot structure can process a multi-wavelength optical signal at high speed.

The active layer 5 constituting the SOA need not have the semiconductor quantum dot structure shown in FIG. 4, but may instead employ a bulk semiconductor layer or a semiconductor layer having a single or multiple quantum well structure. The SOA having the quantum dot structure is applied to signal processing in excess of 40 Gb/s. However, in the case of a low-speed bit rate below 10 Gb/s, there is no necessity to employ the quantum dot structure as the active layer 5.

The principle applied to employ the above SOA as the optical amplifier will be explained hereunder.

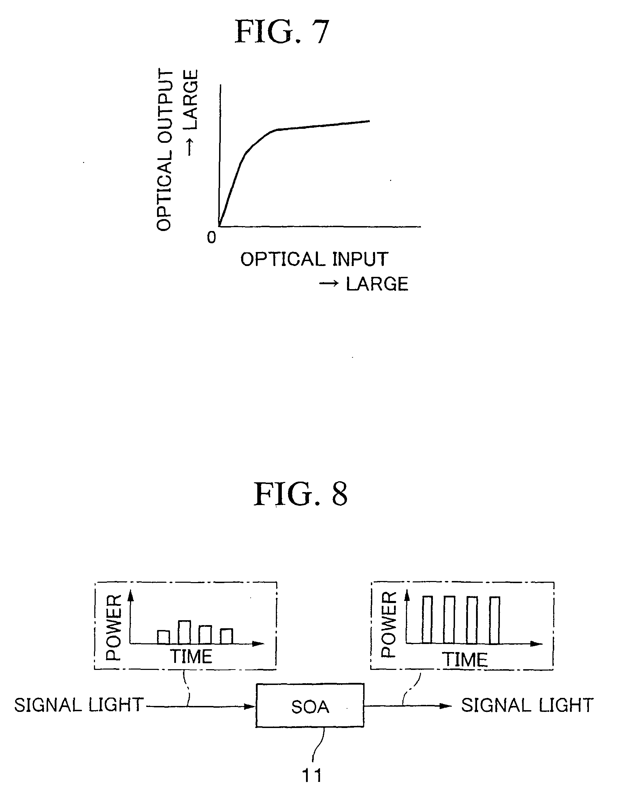

The active layer 5 assumes a population inversion state to generate the gain by applying forward bias to the pn junction by connecting a DC power supply to the n-side electrode 10 and the p-side electrode 9 of the SOA. Because this structure is formed as the optical waveguide as it is, light entering one end of the active layer 5 is amplified in the layer and then exits from the other end. In addition, as shown in FIG. 7, the SOA has such a characteristic that the output light intensity is saturated with respect to the input light intensity. This is called gain saturation. If the SOA has the quantum dots 5d, the gain saturation is caused by the generation of the spectrum hole.

As a result, as shown in FIG. 8, assume that only the signal optical pulse train is incident upon the input side of the SOA element 11 and that intensities of respective signal optical pulse are varied. The variation of the intensity is caused by various factors in the course of the transmission of the signal optical pulses, e. g., generation of noise, or disturbance or branching in the system.

Then, the optical signal can be amplified in the SOA element 11 to make the intensity constant and then output. If the SOA element has the quantum dots 5d, the time required to generate the gain saturation is about 1 ps and therefore it is possible to amplify and shape an optical signal of more than 2 Gb/s, which is difficult for the normal SOA. The configuration shown in FIG.8 uses a 2R element and is suitable for the amplification and the shaping of the optical signal whose bit rate is more than 10 Gb/s, particularly more than 40 Gb/s.

Next, wavelength conversion using the above SOA will be explained.

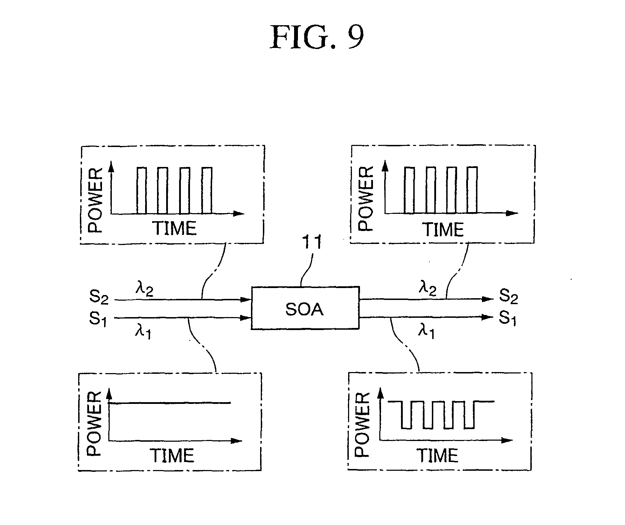

FIG. 9 illustrates the case where a continuous signal S₁ having a weak intensity and a first wavelength λ₁, and a pulsed optical signal S₂ having a strong intensity and a second wavelength λ₂ are input simultaneously into the SOA element 11. In this case, the intensities of the optical signals S₁, S₂ and the amplifying characteristic of the SOA element 11 are adjusted previously such that, when the optical signal S₂ incident upon the SOA element 11 becomes a high level, the gain of the SOA element 11 is saturated. Accordingly, since the gain of the SOA element 11 is varied by the ON/OFF of the pulse of the pulse-train optical signal S₂, the intensity of the continuous optical signal S₁ having the first wavelength λ₁ is subjected to the modulation.

That is, the waveform of the optical signal having the first wavelength λ₁ output from the SOA element 11 is just the inverted waveform of the pulse-train optical signal S₂, and thus the wavelength of the optical pulse train can be changed from the second wavelength λ₂ to the first wavelength λ₁. As a result, the SOA element 11 can exhibit a wavelength converting function.

If the SOA element 11 is formed as the structure having the quantum dots, the spectrum hole SH is formed when the optical signal S₂ is input into the SOA element 11. The spread of the spectrum hole SH in the energy space comes up to the energy of the optical signal S₁ having the first wavelength λ₁. Therefore, when the high level pulse of the optical signal S₂ is input into the SOA element 11, the gain of the optical signal S₁ is reduced and the output intensity of the optical signal S₁ is lowered. For this reason, the waveform of the first wavelength λ₁ that is obtained by inverting the waveform of the optical signal S₂ by the SOA element 11 is obtained. If the SOA element 11 has the quantum dots 5d, the wavelength conversion of the optical signal in excess of 2 Gb/s, which is difficult for the normal SOA, can be carried out and thus such structure is suitable for the wavelength conversion of the optical signal of more than 10 Gb/s, particularly more than 40 Gb/s.

In this case, if the energy of the optical signal S₁ having the first wavelength λ₁ is contained in the spectrum hole of the optical signal S₂ having the second wavelength λ₂. it is needed that difference of the optical energy between the wavelengths λ₁, λ₂ is smaller than a uniform width (10 to 20 meV at the room temperature) of the gain of the quantum dots.

Next, optical signal processing systems utilizing the above principle will be explained hereunder.

### (First Embodiment)

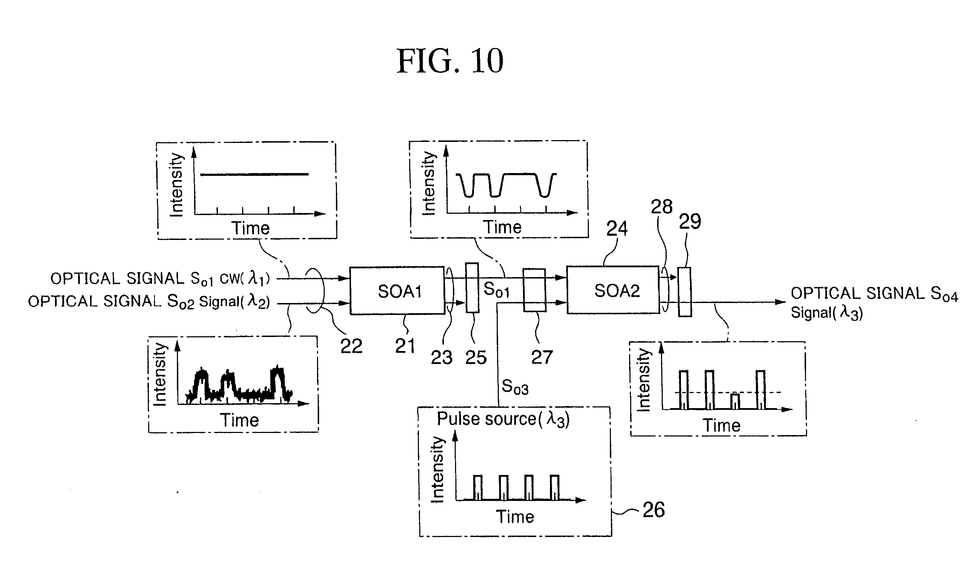

FIG.10 is a system for processing the optical signal employing two SOA elements.

A first optical fiber 22 for transmitting a first optical signal S₀₁ as the continuous light (CW) having the first wavelength λ₁ and a second optical signal S₀₂ having the second wavelength λ₂ is connected to the input end of a first SOA element 21. Also, an output end of the first SOA element 21 is connected optically to the input end of a second SOA element 24 via a second optical fiber 23. The second optical fiber 23 transmits at least one of the first optical signal S₀₁ and the second optical signal S₀₂.

A first filter 25 and an optical coupler 27 for cutting off the light having the second wavelength λ₂ are fitted in sequence in the middle of the second optical fiber 23 in the light traveling direction.

The optical coupler 27 has a structure for coupling an optical pulse train S₀₃ having a third wavelength λ₃ output from a pulse light source 26 with the light that is transmitted through the first filter 25. The optical pulse train S₀₃ having the third wavelength λ₃ is output from the pulse light source 26 substantially in synchronism with the optical signal that is input into the second SOA element 24 through the second optical fiber 23. Also, the optical pulse train S₀₃ has the bit rate equal to the signal pulse of the second optical signal S₀₂.

A third optical fiber 28 is connected to the output end of the second SOA element 24. A second filter 29 for cutting off the light having the first wavelength λ₁ is fitted to the third optical fiber 28.

In the optical signal processing system having the above configuration, when the first optical signal S₀₁ as the continuous-wave (CW) light having the first wavelength λ₁ and the second optical signal S₀₂ having the second wavelength λ₂ and having the bit pattern are input into the first SOA element 21 through the first optical fiber 22, the first optical signal S₀₁ having the first wavelength λ₁, that is modulated into the inverted state of the waveform of the second optical signal S₀₂ is output from the first SOA element 21. In this case, the second optical signal S₀₂ is the disturbed signal that contains high-frequency ASE noise, variation in the intensity between the bits, disturbance of the waveform, and jitter.

The first optical signal S₀₁ having the first wavelength λ₁, which is output from the first SOA element 21, has the inverted waveform of the optical signal pattern having the second wavelength λ₂ and is amplified. But the ASE noise disappears from the waveform. This is because the frequency of the noise is sufficiently slower than a follow-up speed of the gain saturation.

Also, the variation in the peak value existing in the second optical signal S₀₂ having the second wavelength λ₂ is eliminated in the first optical signal S₀₁ having the first wavelength λ₁, which is output from the first SOA element 21, based on the above principle and thus the peak values are uniformized. In this case, the second optical signal S₀₂ having the second wavelength λ₂, which is output from the first SOA element 21, is cut off by the first filter 25.

In addition, the first optical signal S₀₁ having the first wavelength λ₁, which is output from the first SOA element 21 and on which the signal light pattern is superposed, is coupled with the optical pulse train S₀₃ having the third wavelength λ₃ by the coupler 27 and then is incident upon the input end of the second SOA element 24. In this case, the peak value of the optical pulse train S₀₃ becomes smaller than that of the first optical signal S₀₁.

Then, in the second SOA element 24, the optical pulse train S₀₃ that is synchronism with the weak light intensity portion of the first optical signal S₀₁ is amplified to raise the peak value, and also the peak value of the optical pulse train S₀₃ that is synchronous with the strong light intensity portion of the first optical signal S₀₁ is suppressed low. As a result, an optical signal S₀₄ having the third wavelength λ₃, on which the optical signal pattern of the second optical signal S₀₂ being input into the first SOA element 21 is superposed, is output from the second SOA element 24.

The first optical signal S₀₁ having the first wavelength λ₁, which is output from the second SOA element 24, is cut off by the second filter 29.

As described above, as the result of the employment of the optical pulse train S₀₃ having the third wavelength λ₃ output from the new pulse light source 26, the waveform disturbance and the jitter are eliminated from the optical signal S₀₄ having the third wavelength λ₃, on which the signal pattern of the second optical signal S₀₂ being input into the first SOA element 21 is superposed and which is output from the second SOA element 24.

The optical pulse with the intensity that is below a predetermined intensity may be removed from the optical signal S₀₄ having the third wavelength λ₃, which is output from the second SOA element 24, by the nonlinear filter, etc. as occasion demands.

By employing the above configuration, the optical signal having the deformed waveform can be perfectly regenerated without the conversion into the electric signal. In this case, the setting of λ₂=λ₃ causes no problem at all. If the wavelength conversion is needed, λ₂ and λ₃ may be set to different wavelengths.

The signal processing speed is decided by speeds of the first SOA element 21 and the second SOA element 24. Thus, the high-speed signal optical pulse of more than 40 Gb/s, which cannot be processed as an electrical signal, can be regenerated without the pattern effect by employing the SOA having the quantum dots 5d shown in FIG.4.

According to the same configuration, DEMUX of the OTDM signal can be executed. If the bit rate of the pulse light source 26 is set to the bit rate of the signal component constituting the OTDM signal, any one signal component can be picked out.

The above characteristics are compared with the system in the prior art. As the system in the prior art, a system that employs the Mach-Zehnder Interferometer using the SOA is disclosed in D. Wolfson et al., IEEE Photonic Tech. Lett.12, 332(2000), "40 Gb/s All optical wavelength conversion, regeneration, and demultiplexing in as SSOA- based all active Mach-Zehnder Interferometer".

As the result of the comparison between the system in the prior art and the present embodiment, according to the present embodiment, there are provided the advantages that ① there is no pattern effect since the quantum dots are employed the wavelength conversion into the optical wavelengths other than the employed optical wavelength is not caused, and ③ complicated optical waveguides such as the Mach-Zehnder Interferometer, etc. are not needed. Also, it is possible to intentionally cause the wavelength conversion freely.

### (Second Embodiment)

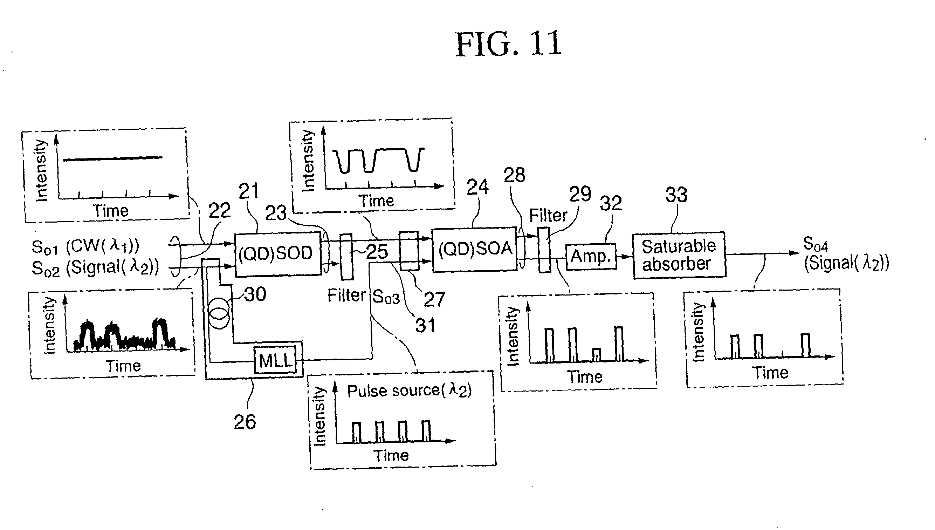

FIG.11 shows an optical 3R repeater that is constructed by utilizing the structure shown in the first embodiment. In FIG.11, the same references as those in FIG.10 denote the same elements. In this case, as the first SOA element 21 and the second SOA element 24, the SOA having the quantum dots (QD) 5d in the active layer 5 shown in FIG.3 is employed.

FIG.11 employs a mode-lock laser (MLL) as the pulse light source 26 shown in FIG.10. The mode-lock laser receives the second optical signal S₀₂ being input into the first SOA element 21 via an optical delay circuit 30 and a third optical fiber 31, and then outputs the signal that is in synchronism with the pulse light of the second optical signal S₀₂ to the second SOA element 24 via the third optical fiber 31. The optical pulse train S₀₃ of the pulse light source 26 has the bit rate that is equal to the signal optical pulse of the second optical signal S₀₂.

The optical delay circuit 30 synchronizes the optical pulse train S₀₃ that is input from the mode-lock laser to the second optical signal S₀₂ having the second wavelength λ₂ that is input into the second SOA element 24.

Accordingly, the wavelength of the optical pulse train S₀₃ of the pulse light source 26 becomes equal to that of the second optical signal S₀₂, and is equivalent to the configuration in which λ₂=λ₃ is set in the system in FIG. 10. As a result, the wavelength of the optical signal S₀₄ that is output from the second SOA element 24 becomes λ₂.

Also, an optical amplifier 32 and a saturable absorber 33 are connected sequentially to the second optical fiber 28, which is connected to the second SOA element 24 on the output side of the second filter 29, in the light traveling direction. Therefore, the perfect pattern of the second optical signal S₀₂ can be reproduced in the optical signal S₀₄ that is output from the optical signal processing system shown in FIG.11. That is, the intensity of the optical signal S₀₄ that is transmitted through the second filter 29 from the second SOA element 24 is amplified to a predetermined magnitude by the optical amplifier 32, and also the light having the intensity that is below the predetermined value is cut off by the saturable absorber 33. As the saturable absorber 33, for example, the semiconductor amplifier that oscillates when a quantity of light that is in excess of the threshold value is input is employed.

According to the above configuration, the second optical signal S₀₂ having the second wavelength λ₂, whose wavelength is collapsed because of ASE noise, waveform disturbance, jitter, etc., can be reproduced into the perfect pattern by reshaping, amplifying, and retiming, and can be output substantially from the saturable absorber 33 without the wavelength conversion.

### (Third Embodiment)

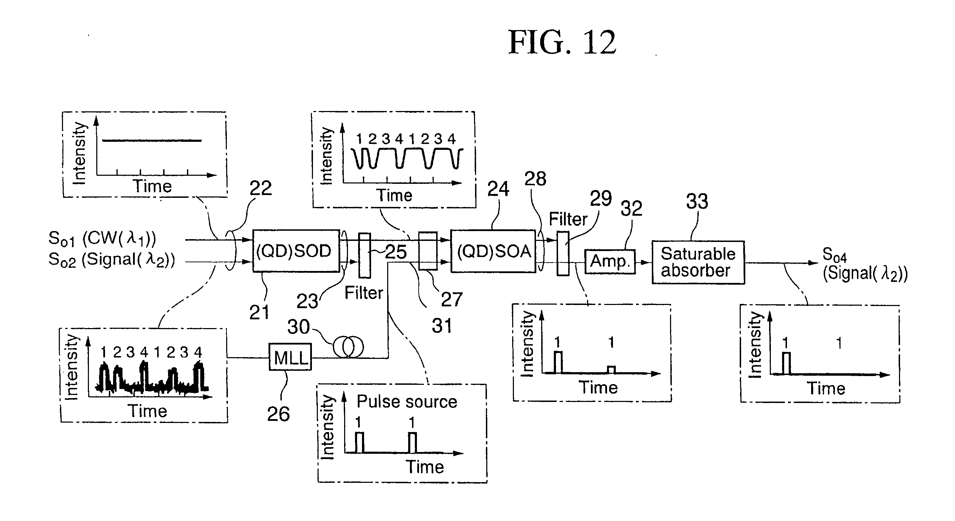

FIG.12 shows the DEMUX device that is constructed by utilizing the configuration shown in the first embodiment. In FIG.12, the same references as those in FIG.10, FIG.11 denote the same elements. In this case, as the first SOA element 21 and the second SOA element 24, the SOA having the quantum dots (QD) 5d in the active layer 5 shown in FIG.3 is employed.

The DEMUX device employs the mode-lock laser (MLL) as the pulse light source 26. The optical pulse train S₀₃ output from the mode-lock laser has the bit rate equal to respective signal components constituting the multiple signal optical pulse of the second optical signal S₀₂ that is input into the first SOA element 21.

The mode-lock laser inputs the optical pulse train S₀₃ having the second wavelength λ₂ at 40 Gb/s into the second SOA element 24 via the third optical fiber 31. The optical delay circuit 30 is fitted to the third optical fiber 31 between the optical coupler 27 and the pulse light source 26.

Therefore, the pulse train having the same second wavelength λ₂ as the second optical signal S₀₂ is input from the pulse light source 26 to the second SOA element 24. As a result, the wavelength of the optical signal S₀₄ that is output from the second SOA element 24 and passed through the second filter 29 becomes λ₂.

Meanwhile, the second optical signal S₀₂ having the second wavelength λ₂, that is input into the first SOA element 21, is a quadruple OTDM signal of 160 Gb/s. In the OTDM signal, four time-divided signal trains are discriminated by affixing numbers 1, 2, 3, 4 in the optical waveform in FIG.12.

Also, the optical amplifier 32 and the saturable absorber 33 are connected in sequence to the optical fiber 28 on the outside of the second filter 25 in the light traveling direction, and thus the perfect pattern can be reproduced as the optical signal. That is, the intensity of the optical signal S₀₄ that is output from the second SOA element 24 is amplified up to the predetermined magnitude by the optical amplifier 32, and also the light having the intensity that is below the predetermined value is cut off by the saturable absorber 33.

In the DEMUX device having the above configuration, when the first optical signal S₀₁ as the continuous light having the first wavelength λ₁ and the second optical signal (OTDM signal) S₀₂ having the second wavelength λ₂ are input into the first SOA element 21 via the first optical fiber 22, the first optical signal S₀₁ whose waveform is the inverted waveform of the second optical signal S₀₂ is output from the first SOA element 21.

The second optical signal S₀₂ is the disturbed signal that contains high-frequency ASE noise, variation in the intensity between the bits, waveform disturbance, and jitter. In this case, the light having the first wavelength λ₁, which is output from the first SOA element 21, has the inverted waveform of the optical signal pattern of the second optical signal S₀₂ and also is amplified, but the ASE noise disappears from the waveform. This is because the frequency of the noise is sufficiently slower than the follow-up speed of the gain saturation.

Also, the variation in the intensity existing in the second optical signal S₀₂ having the second wavelength λ₂ is not reflected on the first optical signal S₀₁, which is output from the first SOA element 21, based on the above principle, and thus the peak values are uniformized. In this case, the second optical signal S₀₂ output from the first SOA element 21 is cut off by the first filter 25.

In addition, the first optical signal S₀₁ having the first wavelength *λ*₁, which is output from the first SOA element 21 and on which the signal optical pattern is superposed, as well as the optical pulse train S₀₃ output from the pulse light source 26 is input into the second SOA element 24. The intensity of the optical pulse train S₀₃ becomes smaller than the first optical signal S₀₁ output from the first SOA element 21. In this case, the leading portion (high level portion) of the optical pulse train S₀₃ output from the pulse light source 26 is adjusted by the optical delay circuit 30 so as to synchronize with the number 1 of the first optical signal S₀₁ output from the first SOA element 21.

Then, in the second SOA element 24, the high level portion of the optical pulse train S₀₃ output from the pulse light source 26 is amplified in synchronism with the low level light #1 of the quadruple signal trains of the first optical signal S₀₁. Also, the low level portion of the optical pulse train S₀₃ output from the pulse light source 26 is reduced in intensity in synchronism with the number 1 of the quadruple signal trains having the first wavelength λ₁. Accordingly, the optical pulse train S₀₃ is modulated to provide the optical signal S₀₄.

The first optical signal S₀₁ having the first wavelength λ₁ output from the second SOA element 24 is cut off by the second filter 29. Also, the pulses having the small intensity, which are not contained in the first pulse train of the second optical signal S₀₂, are contained in the optical signal S₀₄ having the second wavelength λ₂ output from the second filter 29. Therefore, such intermediate-level pulses are amplified by the optical amplifier 32 and then are cut off by the saturable absorber 33.

As a result, only the optical signal train of the second optical signal S₀₂, which is input into the first SOA element 21 and has the predetermined number, is reproduced and picked up. In addition, the reproduced optical signal has a perfect pattern waveform in which disturbances such as ASE noise, jitter, etc. do not exist.

### (Other Embodiment)

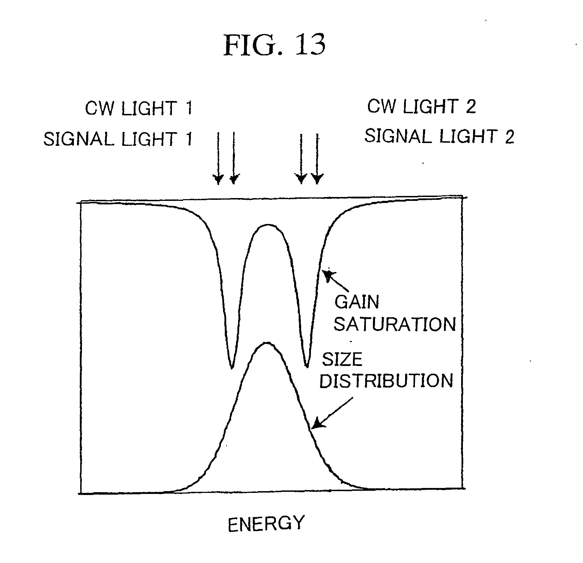

It is conceptually shown in FIG.13 that the optical signal processing systems employing the present invention as described above can execute a multi-wavelength process. According to FIG.13, it can be understood that optical signals isolated to exceed the uniform width of the gain in the gain curve, which is spread by the size distribution of the quantum dots, can be processed independently.

As described, according to the present invention, the first light signal as the continuous light having the first wavelength and the second light signal having the waveform of the signal optical pulse and the second wavelength are input into the first optical amplifier, whereby the intensity profile of the first light signal can be modulated into the waveform, which is the inverted waveform of the signal optical pulse, and can be optically amplified. At the stage subsequent to this, the first light signal that is output from the first optical amplifier and the controlling optical pulse train that is output from the pulse light source are input into the second optical amplifier, whereby the optical pulse of the controlling optical pulse train, which is synchronized with the low level intensity of the first light signal, can be optically amplified and also the intensity of the optical pulse, which is synchronized with the high level intensity of the first light signal, can be lowered. Therefore, the second light signal of the second wavelength having the optical signal whose waveform is collapsed can be wavelength-converted into an output optical signal having the third wavelength by the first and second optical amplifiers and can be reproduced.

In addition, if the third wavelength and the second wavelength are set equal to each other, the output optical signal having the second wavelength can be output from the second optical amplifier, and the optical signal of the second light signal can be reshaped and amplified without wavelength conversion and can be perfectly reproduced.

With the above, the perfect reproduction of the optical signals whose waveform is collapsed by noise, variation in the intensity, jitter, etc. can be achieved.

## Claims

1. An optical signal processing system comprising:
a first optical transmitting device (22) for transmitting a first light signal (S₀₁) having a first wavelength in a continuous light state and a second light signal (S₀₂) having signal optical pulses and a second wavelength;
a first semiconductor optical amplifier (21) for receiving the first light signal and the second light signal (S₀₁, S₀₂) from the first optical transmitting device (22);
a pulse light source (26) for outputting a controlling optical pulse train (S₀₃) having a third wavelength in synchronism with the first light signal (S₀₁) on which the second light signal is superposed by the first semiconductor optical amplifier (21);
a second optical transmitting device (23) for transmitting the first light signal (S₀₁) on which the second light signal is superposed by the first semiconductor optical amplifier (21) and the controlling optical pulse train (S₀₃) output from the pulse light source (26); and
a second semiconductor optical amplifier (24) for receiving the first light signal (S₀₁) and the controlling optical pulse train (S₀₃) from the second optical transmitting device (23) and outputting an output optical signal (S₀₄) having the third wavelength, on which the signal optical pulses of the second light signal are superposed; **characterised in that**:
each of the first and second semiconductor optical amplifiers (21, 24) contains semiconductor quantum dots (5d), and pulses of said controlling optical pulse train (S₀₃) are arranged to be in synchronism with weak light intensity portions of the first light signal (S₀₁), whereby high-speed wavelength conversion of said first and second light signals (S₀₁, S₀₂) in the first semiconductor optical amplifier, and of the first light signal (S₀₁) and the controlling optical pulse train (S₀₃) in the second semiconductor optical amplifier (24), can be carried out by cross-gain modulation.

2. An optical signal processing system according to claim 1, wherein the controlling optical pulse train (S₀₃) having the third wavelength has a bit rate that is equal to the signal optical pulse transmitted through the first optical transmitting device (22).

3. An optical signal processing system according to claim 1, wherein the signal optical pulse of the second light signal (S₀₂) is an optical time-division multiple signal, and the controlling optical pulse train (S₀₃) having the third wavelength has a bit rates that are equal to respective signal components constituting the optical time-division multiple signal.

4. An optical signal processing system according to any preceding claim, wherein the third wavelength is equal to the second wavelength.

5. An optical signal processing system according to claim 1, wherein the signal optical pulse having the second wavelength and the controlling optical pulse train (S₀₃) having the third wavelength, both being transmitted over the first optical transmitting device (22), have the same bit rate, and
the output optical signal (S₀₄) has a waveform that is restored by converting the signal optical pulse from the second wavelength to the third wavelength.

6. An optical signal processing system according to any preceding claim, wherein the first optical transmitting device (22) and the second optical transmitting device (23) are formed of an optical fiber.

7. An optical signal processing system according to any preceding claim, wherein the pulse light source (26) is a mode-lock laser.

8. An optical signal processing system according to claim 7, wherein the mode-lock laser is adapted to irradiate the second light signal.

9. An optical signal processing system according to claim 7 or 8, wherein an optical delay circuit (30) is connected to the mode-lock laser.

10. An optical signal processing system according to any preceding claim, wherein the first wavelength is different from the second wavelength.

11. An optical signal processing system according to any preceding claim, wherein a filter (25) for cutting off the second light signal (S₀₂) is arranged in the second optical transmitting device (23).

12. An optical signal processing system according to any preceding claim, wherein a filter (29) for cutting off the first light signal (S₀₁) is arranged on an output side of the second optical amplifier (24).

## Patentansprüche

1. Optische Signale verarbeitendes System, mit:
einer ersten optischen Übertragungseinrichtung (22), um ein erstes Lichtsignal (S₀₁) mit einer ersten Wellenlänge in einem kontinuierlichen Lichtzustand und ein zweites Lichtsignal (S₀₂) mit optischen Signalimpulsen und einer zweiten Wellenlänge zu übertragen;
einem ersten optischen Halbleiterverstärker (21), um das erste Lichtsignal und das zweite Lichtsignal (S₀₁, S₀₂) von der ersten optischen Übertragungseinrichtung (22) zu empfangen;
einer Impulslichtquelle (26), um eine steuernde optische Impulsfolge (S₀₃) mit einer dritten Wellenlänge synchron mit dem ersten Lichtsignal (S01) abzugeben, worauf das zweite Lichtsignal durch den ersten optischen Halbleiterverstärker (21) überlagert wird;
einer zweiten optischen Übertragungseinrichtung (23), um das erste Lichtsignal (S₀₁), worauf das zweite Lichtsignal durch den ersten optischen Halbleiterverstärker (21) überlagert wird, und die steuernde optische Impulsfolge (S₀₃) zu übertragen, die von der Impulslichtquelle (26) abgegeben wird; und
einem zweiten optischen Halbleiterverstärker (24), um das erste Lichtsignal (S₀₁) und die steuernde optische Impulsfolge (S₀₃) von der zweiten optischen Übertragungseinrichtung (23) zu empfangen und ein optisches Ausgangssignal (S₀₄) mit der dritten Wellenlänge abzugeben, worauf die optischen Signalimpulse des zweiten Lichtsignals überlagert sind; und **dadurch gekennzeichnet, dass**:
sowohl der erste als auch zweite optische Halbleiterverstärker (21, 24) Halbleiter-Quantenpunkte (5d) enthält und Impulse der steuernden optischen Impulsfolge (S₀₃) so angeordnet sind, dass sie mit schwachen Lichtintensitätsabschnitten des ersten Lichtsignals (S₀₁) synchron sind, wodurch eine Hochgeschwindigkeits-Wellenlängenumwandlung der ersten und zweiten Lichtsignale (S₀₁, S₀₂) im ersten optischen Halbleiterverstärker und des ersten Lichtsignals (S₀₁) und der steuernden optischen Impulsfolge (S₀₃) im zweiten optischen Halbleiterverstärker (24), durch eine Kreuz-Verstärkungsmodulation ausgeführt werden kann.

2. Optische Signale verarbeitendes System nach Anspruch 1, wobei die steuernde optische Impulsfolge (S₀₃) mit der dritten Wellenlänge eine Bitrate hat, die gleich dem durch die erste optische Übertragungseinrichtung (22) übertragenen optischen Signalimpuls ist.

3. Optische Signale verarbeitendes System nach Anspruch 1, wobei der optische Signalimpuls des zweiten Lichtsignals (S₀₂) ein optisches Zeitteilungs-Multisignal ist und die steuernde optische Impulsfolge (S₀₃) mit der dritten Wellenlänge Bitraten aufweist, die gleich jeweiligen Signalkomponenten sind, die das optische Zeltteilungs-Multisignal bilden.

4. Optische Signale verarbeitendes System nach einem der vorhergehenden Ansprüche, wobei die dritte Wellenlänge gleich der zweiten Wellenlänge ist.

5. Optische Signale verarbeitendes System nach Anspruch 1, wobei der optische Signalimpuls mit der zweiten Wellenlänge und die steuernde optische Impulsfolge (S₀₃) mit der dritten Wellenlänge, die beide über die erste optische Übertragungseinrichtung (22) übertragen werden, die gleiche Bitrate haben und
das optische Ausgangssignal (S₀₄) eine Wellenform hat, die wiederhergestellt wird, indem der optische Signalimpuls von der zweiten Wellenlänge in die dritte Wellenlänge umgewandelt wird.

6. Optische Signale verarbeitendes System nach einem der vorhergehenden Ansprüche, wobei die erste optische Übertragungseinrichtung (22) und die zweite optische Übertragungseinrichtung (23) aus einer optischen Faser gebildet sind.

7. Optische Signale verarbeitendes System nach einem der vorhergehenden Ansprüche, wobei die Impulslichtquelle (26) ein Laser mit Modenkopplung ist.

8. Optische Signale verarbeitendes System nach Anspruch 7, wobei der Laser mit Modenkopplung dafür eingerichtet ist, das zweite Lichtsignal abzustrahlen.

9. Optische Signale verarbeitendes System nach Anspruch 7 oder 8, wobei eine optische Verzögerungsschaltung (30) mit dem Laser mit Modenkopplung verbunden ist.

10. Optische Signale verarbeitendes System nach einem der vorhergehenden Ansprüche, wobei die erste Wellenlänge von der zweiten Wellenlänge verschieden ist.

11. Optische Signale verarbeitendes System nach einem der vorhergehenden Ansprüche, wobei ein Filter (25) zum Abschneiden des zweiten Lichtsignals (S₀₂) in der zweiten optischen Übertragungseinrichtung (23) angeordnet ist.

12. Optische Signale verarbeitendes System nach einem der vorhergehenden Ansprüche, wobei ein Filter (29) zum Abschneiden des ersten Lichtsignals (S₀₁) auf einer Ausgangsseite des zweiten optischen Verstärkers (24) angeordnet ist.

## Revendications

1. Système de traitement de signal optique comportant :
un premier dispositif de transmission optique (22) pour transmettre un premier signal lumineux (S₀₁) possédant une première longueur d'onde dans un état lumineux continu et un second signal lumineux (S₀₂) possédant des impulsions optiques de signal et une seconde longueur d'onde;
un premier amplificateur optique à semi-conducteur (21) pour recevoir le premier signal lumineux et le second signal lumineux (S₀₁, S₀₂) provenant du premier dispositif de transmission optique (22) ;
une source de lumière pulsée (26) pour délivrer un train d'impulsions optiques de commande (S₀₃) possédant une troisième longueur d'onde en synchronisme avec le premier signal lumineux (S₀₁) sur lequel le second signal lumineux est superposé par le premier amplificateur optique à semi-conducteur (21) ;
un second dispositif de transmission optique (23) pour transmettre le premier signal lumineux (S₀₁) sur lequel le second signal lumineux est superposé par le premier amplificateur optique à semi-conducteur (21) et le train d'impulsions optiques de commande (S₀₃) délivré depuis la source de lumière pulsée (26) ; et
un second amplificateur optique à semi-conducteur (24) pour recevoir le premier signal lumineux (S₀₁) et le train d'impulsions optiques de commande (S₀₃) provenant du second dispositif de transmission optique (23) et délivrant un signal optique de sortie (S₀₄) possédant la troisième longueur d'onde, sur lequel les impulsions optiques de signal du second signal lumineux sont superposées ; **caractérisé en ce que** :
chacun un des premier et second amplificateurs optiques à semi-conducteur (21, 24) contient des points quantiques semi-conducteurs (5d), et les impulsions dudit train d'impulsions optiques de commande (S₀₃) sont disposées pour être en synchronisme avec des parties d'intensité lumineuse faibles du premier signal lumineux (S₀₁), moyennant quoi la conversion de longueur d'onde à vitesse élevée desdits premier et second signaux lumineux (S₀₁, S₀₂) dans le premier amplificateur optique à semi-conducteur, et celle du premier signal lumineux (S₀₁) et du train d'impulsions optiques de commande (S₀₃) dans le second amplificateur optique à semi-conducteur (24) peuvent être effectuées par une modulation croisée de gain.

2. Système de traitement de signal optique selon la revendication 1, dans lequel le train d'impulsions optiques de commande (S₀₃) possédant la troisième longueur d'onde possède un débit binaire qui est égal à l'impulsion optique de signal transmise par l'intermédiaire du premier dispositif de transmission optique (22).

3. Système de traitement de signal optique selon la revendication 1, dans lequel l'impulsion optique de signal du second signal lumineux (S₀₂) est un signal multiple par répartition dans le temps optique, et le train d'impulsions optiques de commande (S₀₃) possédant la troisième longueur d'onde possède des débits binaires qui sont égaux aux composants de signal respectifs constituant le signal multiple à répartition dans le temps optique.

4. Système de traitement de signal optique selon l'une quelconque des revendications précédentes, dans lequel la troisième longueur d'onde est égale à la seconde longueur d'onde.

5. Système de traitement de signal optique selon la revendication 1, dans lequel l'impulsion optique de signal possédant la seconde longueur d'onde et le train d'impulsions optiques de commande (S₀₃) possédant la troisième longueur d'onde, les deux étant transmis par l'intermédiaire du premier dispositif de transmission optique (22), possèdent le même débit binaire, et
le signal optique de sortie (S₀₄) possède une forme d'onde qui est récupérée en convertissant l'impulsion optique de signal de la seconde longueur d'onde à la troisième longueur d'onde.

6. Système de traitement de signal optique selon l'une quelconque des revendications précédentes, dans lequel le premier dispositif de transmission optique (22) et le second dispositif de transmission optique (23) sont constitués d'une fibre optique.

7. Système de traitement de signal optique selon l'une quelconque des revendications précédentes, dans lequel la source lumineuse d'impulsions (26) est un laser à verrouillage de modes.

8. Système de traitement de signal optique selon la revendication 7, dans lequel le laser à verrouillage de modes est adapté pour rayonner le second signal lumineux.

9. Système de traitement de signal optique selon la revendication 7 ou 8, dans lequel un circuit à retard optique (30) est relié au laser à verrouillage de modes.

10. Système de traitement de signal optique selon l'une quelconque des revendications précédentes, dans lequel la première longueur d'onde est différente de la seconde longueur d'onde.

11. Système de traitement de signal optique selon l'une quelconque des revendications précédentes, dans lequel un filtre (25) pour couper le second signal lumineux (S₀₂) est disposé dans le second dispositif de transmission optique (23).

12. Système de traitement de signal optique selon l'une quelconque des revendications précédentes, dans lequel un filtre (29) pour couper le premier signal lumineux (S₀₁) est disposé sur un côté sortie du second amplificateur optique (24).
